# EUROPÄISCHE PATENTSCHRIFT

(11) **EP 2 611 873 B1**
(45) Veröffentlichungstag und Bekanntmachung des Hinweises auf die Patenterteilung: **05.11.2014**
(21) Anmeldenummer: 11813525.0
(22) Anmeldetag: 02.09.2011
(51) Int. Cl.: C09D 11/00, C09D 11/02

(54) **WACHSBLENDS ENTHALTEND LANGKETTIGE KOHLENWASSERSTOFFE UND ALKOHOLE, DRUCKFARBENZUSAMMENSETZUNGEN UND THERMOTRANSFERBÄNDER ENTHALTEND DERARTIGE WACHSBLENDS UND VERWENDUNG DER WACHSBLENDS**
WAX BLENDS CONTAINING LONG-CHAIN HYDROCARBONS AND ALCOHOLS, PRINTING INK COMPOSITIONS AND THERMAL TRANSFER RIBBONS CONTAINING SUCH WAX BLENDS, AND USE OF THE WAX BLENDS
MÉLANGES DE CIRES CONTENANT DES ALCOOLS ET HYDROCARBURES À LONGUE CHAÎNE, COMPOSITIONS D'ENCRE D'IMPRESSION ET BANDES DE TRANSFERT THERMIQUE CONTENANT CES MÉLANGES DE CIRES ET UTILISATION DES MÉLANGES DE CIRES

(30) Priorität: 03.09.2010 DE 102010044319
(43) Veröffentlichungstag der Anmeldung: 10.07.2013
(73) Patentinhaber: Sasol Wax GmbH, 20457 Hamburg (DE)
(72) Erfinder: SCHNEIDER, Ulrich, 25492 Heist (DE); KURRAS, Uwe, 22307 Hamburg (DE); FRICK, Thorsten, 22523 Hamburg (DE)
(74) Vertreter: Müller Schupfner & Partner Patent- und Rechtsanwaltspartnerschaft mbB
(86) Internationale Anmeldenummer: PCT/DE2011/001675
(87) Internationale Veröffentlichungsnummer: WO 2012/048672

(56) Entgegenhaltungen:
- WO-A1-00/06617
- DE-A1-102005 035 515
- US-A1- 2003 149 134
- US-A1- 2007 119 337
- US-A1- 2007 119 338

## Beschreibung

Die vorliegende Erfindung betrifft Wachsblends enthaltend langkettige Kohlenwasserstoffe und Alkohole, Druckfarbenzusammensetzungen und Thermotransferbänder enthaltend die Wachsblends und die Verwendung der Wachsblends als Additiv in Druckfarben.

Es ist bekannt Paraffin-Wachsmischungen im Bereich der Druckindustrie einzusetzen. Für einige Anwendungen werden Wachsblends mit sehr eng geschnittener C-Kettenverteilung eingesetzt. Derartige Wachsblends werden als Fraktionen durch Destillation aus Paraffinen natürlicher oder synthetischer Herkunft gewonnen. Die eng geschnittene C-Kettenverteilung hat sowohl ein schnelles, vollständiges Aufschmelzen des Wachses während des Druckvorganges zur Folge als auch ein schnelles Erstarren der Druckfarbe nach dem Druckvorgang. Durch ihre geringe Viskosität und einen engen Schmelzbereich sorgen sie für eine saubere Applikation der Druckfarbe auf dem Trägermedium. Desweiteren sorgen die Wachse für ein entsprechendes Gleitverhalten ("slip") der Druckfarbe und üben damit auch eine Schutzfunktion nach dem Druckvorgang aus.

Derartige, besonders eng geschnittene Paraffinwachse müssen durch spezielle Destillationsverfahren in besonders dafür ausgelegten Anlagen hergestellt werden und stehen weltweit nur begrenzt zu hohen Kosten zur Verfügung.

Der Erfindung liegt die Aufgabe zugrunde, neuartige Wachsblends zur Verfügung zu stellen, die einen engen, definierten Schmelzbereich aufweisen. Anders als gesondert destillierte Wachsschnitte werden die erfindungsgemäßen Wachsblends durch Vermischung bestimmter, besser verfügbarer und kostengünstiger Komponenten dargestellt.

Dabei sollen die Wachsblends möglichst direkt von einem festen in einen niedrigviskosen flüssigen Zustand übergehen. Ein solches Verhalten wird besonders bei Druckfarben gefordert, welche die Wachsmischungen als Trägersubstanz umfassen. Diese können sowohl in Toner-Druckfarben als auch als TTR (Thermal Transfer Ribbons) oder als wachsbasierte Druckfarben für den Digitaldruck oder Pulverlacke Verwendung finden.

Üblicherweise sind oleochemische Grundstoffe, die ebenfalls einen engen Schmelzbereich aufweisen aufgrund ihrer sonstigen Eigenschaften wie Sprödigkeit, und Kristallinität etc, nicht als Alternative zu den eng geschnittenen Wachsen einsetzbar.

In den erfindungsgemäßen Wachsblends hat sich überraschend gezeigt, dass eine Auswahl von an sich bekannten Wachsen und langkettigen Alkoholen umfassend aliphatische Polyether mit Hydroxy-Funktionalität zu ebenso eng schmelzenden und technisch einsetzbaren Produkten führt. Die Schmelze ist gut fließfähig und weist eine vergleichsweise niedrige Viskosität auf.

Die erfindungsgemäßen Wachsblends sind durch eine Kombination unterschiedlich langkettiger Kohlenwasserstoffe (paraffinischer Wachse) und langkettiger Alkohole erhältlich. Je nach Anforderung an den Schmelzpunkt und die Härte des Produktes werden die einzelnen Komponenten wie nachfolgend beschreiben aufeinander abgestimmt.

Als langkettige aliphatische Alkohole mit 12 bis 36, vorzugsweise 18 bis 28, Kohlenstoffatomen kommen in Frage: Fettalkohole (C12-C22), Wachsalkohole (C24 - C36), Polyether mit zumindest einer freien Hydroxygruppe, wie Polyethylenglykole, Glykole, Diole und/oder Polyole. Besonders geeignet haben sich aliphatische Fett- und Wachsalkohole mit mindestens einer Hydroxylgruppe, vorzugsweise einer Hydroxylgruppe.

Die langkettigen Kohlenwasserstoffe mit 18 bis 110, insbesondere 20 bis 100 Kohlenstoffatomen, nach einer anderen Ausgestaltung bevorzugt mit 20 bis 70 Kohlenstoffatomen, können aus der Gruppe der Alkane ausgewählt werden. Hierbei handelt es sich um gesättigte lineare und/oder verzweigte Kohlenwasserstoffgemische, die aus Mineralöl oder synthetisch gewonnen werden können. Die Gruppe der langkettigen Kohlenwasserstoffe umfasst Paraffinwachse, mikrokristalline Wachse, Fischer-Tropsch-Wachse und/oder niedrigkettige Polyethylenwachse, insbesondere Fischer-Tropsch-Wachse mit 18 bis 110 und vorzugsweise 20 bis 100 C-Atomen.

Fischer-Tropsch Wachse (FT-Wachse) sind lineare Kohlenwasserstoffe aufweisend 1 bis 10% Moleküle mit einer oder mehreren Methyl-Verzweigung(en) (Bestimmung des iso-Alkan-Anteils nach Standard Test Method for Analysis of Hydrocarbon Waxes by Gas Chromatography EWF Method 001/03). Die FT-Wachse haben eine niedrige kinematische Viskosität, wie z.B. bei 120°C von kleiner 25 mm²/s und bei 130°C von ca. 21 mm²/s.

Von den langkettigen Kohlenwasserstoffen sind nach einer Ausführungsform, vorzugsweise zumindest 50 Gew.%, insbesondere 70 Gew.% Fischer-Tropsch Wachse. Die langkettigen Kohlenwasserstoffe können eine Mischung aus FischerTropsch Wachsen und mikrokristallinen Wachsen sein und/oder die langkettigen Kohlenwasserstoffe bzw. die Fischer-Tropsch Wachse sind zumindest zum Teil hydroisomerisierte Fischer-Tropsch-Wachse.

Die eingesetzten Fischer-Tropsch Wachse weisen nach einer Ausführungsform vorzugsweise Erstarrungspunkte von50 bis 105°C, insbesondere 75 bis 105 °C auf und sind unabhängig hiervon weiter gekennzeichnet durch eine kinematische Viskosität von kleiner 25 mm²/s, insbesondere kleiner 20 mm²/s, bei zumindest 10°C über dem Erstarrungspunkt des Fischer-Tropsch Wachses(ASTM D445).

Die Wachsblends können Erstarrungspunkte von 45 bis 80 °C, ggf. sogar bis zu 90°, insbesondere 50 bis 78 °C, insbesondere bevorzugt von 55 bis 75 °C aufweisen und sind dann besonders geeignet zur Verwendung in Thermotransferbändern. Andererseits können die Wachsblends Erstarrungspunkt von 55 bis 90 °C, insbesondere 70 bis 90 °C aufweisen und sind dann besonders gut als oder zur Verwendung in "Solid inks" oder Tonern geeignet.

Neben den obigen Kohlenwasserstoffen können zusätzlich auch Wachse in Form von oxidierten, verseiften, und/oder hydroisomerisierten Kohlenwasserstoffderivaten eingesetzt werden. Die Wachse können einzeln aber auch als Gemisch aus zwei oder mehreren Wachsen eingesetzt werden.

Exemplarisch enthält das Wachsblend (Summe gleich 100 Gew. %, Wachsblend A)
- 50 - 75 Gew.%: lineare Fettalkohole mit 20 bis 24 C- Atomen, insbesondere 22 C Atomen, und einem Erstarrungspunkt von 67 - 73 °C,
- 5 - 15 Gew. %: Fischer Tropsch Wachs mit einem Erstarrungspunkt von 75 - 85 °C und
- 8 - 20 Gew. %: eines mikrokristallinen Wachses mit einem Erstarrungspunkt von 60 -80 °C
- 5 - 15 Gew. %: eines Paraffinwachses mit einem Erstarrungspunkt von 50 - 70 °C

Ein alternativer Wachsblend (Summe gleich 100 Gew.%, Wachsblend B) ist:
- 50 - 75 Gew.%: lineare Fettalkohole mit 20 bis 24 C- Atomen, insbesondere 22 C Atomen, und einem Erstarrungspunkt von 67 - 73 °C,
- 5 - 15 Gew. %: Fischer Tropsch Wachs mit einem Erstarrungspunkt von 80 - 105 °C und
- 8 - 20 Gew. %: eines hydroisomerisierten FT-Wachses mit einem Erstarrungspunkt von 60 -90 °C
- 5 - 15 Gew. %: eines FT-Wachses mit einem Erstarrungspunkt von 50 - 80 °C

Für die Anwendungseigenschaften der Wachsblends und der Druckfarbenzusammensetzung ist ein definiertes Schmelz- und Erstarrungsverhalten wichtig. Dieses wird mittels dynamischer Differenzkalorimetrie (DSC) (DIN 53765) bestimmt. Die DSC ist ein thermisches Verfahren zur Messung von abgegebener/aufgenommener Wärmemenge einer Probe bei isothermer Arbeitsweise, Aufheizung oder Abkühlung.

Aus den Aufschmelz- und Erstarrungskurven der durchgeführten Messungen ist ersichtlich, dass die neuartigen Wachsblends im gleichen engen Temperaturbereich wie die eng geschnittenen Wachsfraktionen schmelzen und erstarren. Die dabei gemessenen Wärmemengen sind vergleichbar.

Vorteilhaft werden etwa zusammengebracht:
(A) Kohlenwasserstoffe mit 20 bis 70 C-Atomen (vorzugsweise 22 bis 39 Gew.%), z.B. herstellbar aus einem FT-Wachs mit 26 bis 60 C-Atomen (vorzugsweise größer 8 Gew.% bis 12 Gew. %) und einem mikrokristallinen Wachs mit 25 bis 70 C-Atomen (vorzugsweise größer 9 Gew. % bis 15 Gew. %) und einem Paraffinwachs mit 23 - 46 C-Atomen (vorzugsweise größer 5 Gew.% bis 12 Gew. %), und
(B) einem C18 bis C28, insbesondere C20 bis C22 Alkohol.

Die Druckfarbenzusammensetzung kann von 1 bis weit über 60 Gew.%, insbesondere größer 6 Gew.%, Wachsblend neben Farbstoffen in Form von anorganischen Pigmenten oder organischen Farbstoffen enthalten. Es zeigt sich, dass mit Hilfe von fraktionierten Alkoholen und entsprechenden Wachsen Blends für unterschiedliche Temperaturbereiche und damit Arbeitsbereiche für Druckfarben hergestellt werden können.

Die Einfärbung kann durch Farbstoffe erfolgen. Es kann sich um Pigmente, wie insbesondere um Ruß, aber auch um lösungsmittel- und/oder bindemittellösliche Farbmittel, organische Farbpigmente sowie verschiedene Azofarbstoffe (Cercesund Sudanfarbstoffe) handeln. Vorzugsweise enthält die Druckfarbenzusammensetzung das Farbmittel, insbesondere Farbpigment, in einer Menge von etwa 5 bis 20 Gew.-%. Die Farbstoffe können zur Gruppe der Azoverbindungen oder der Gruppe polycyclischer Verbindungen gehören. Typische Beispiele sind Monoazogelb-, Monoazoorange-, Diazo-, ß-Naphthol-, Naphthol-AS-, Benzimidazolon-, Diazo- Kondensations-, Metallkomplex-, Isoindolinon-oder Isoindolin-Pigmente als Vertreter der Azoverbindungen bzw. Phthalocyanin-, Chinacridon-, Perylen-, Perinon-, Thioindigo-, Anthrachinon-, Anthrapyrimidin-, Flavanthron-, Pyranthron-, Anthanthron-, Dioxazin-, Triarylcarbonium-, Chinophthalon-oder Diketopyrrolopyrrol-Pigmente als Vertreter der polycyclischen Verbindungen. Da diese farbgebenden Stoffe nicht gelöst in Molekülform, sondern als aus diesen Molekülen aufgebaute organische Feststoffe vorliegen, hängen ihre physikalischen Eigenschaften und insbesondere ihre Farbeigenschaften nicht nur von der jeweiligen Molekülstruktur, sondern auch noch zusätzlich von der Beschaffenheit der jeweiligen Kristallstruktur ab. Weiterhin kann die Farbe aus feinkörnigen Kohlenstoffpartikeln (Ruß) bestehen. Der Wachsblend wirkt als Träger/Trägerbestandteil und/oder Bindemittel/ Bindemittelbestandteil für die Farbstoffe.

Die Druckfarbenzusammensetzung kann vielfältige Zusätze enthalten, wie insbesondere Harze, Klebrigmacher in Form von Terpenphenolharzen oder andere Additive.

Als Harze beispielhaft genannt seien Kolophoniumharze, die auch modifiziert sein können. Mögliche Modifikationen sind dabei Reaktionen an der Doppelbindung, z. B. eine Diels-Alder Reaktion mit Maleinsäureanhydrid (Maleinatharze), Reaktionen mit Phenolen und Formaldehyd, z. B. Resolbildung (Phenolharze) und Reaktionen an der Carboxylgruppe, z. B. Veresterung mit Polyolen.

Weitere Harztypen sind Kohlenwasserstoffharze, wie sie z. B. aus der Erdölcrackung erhalten werden, Hybridharze und Alkydharze.

Weiterer Bestandteil der Druckfarbenzusammensetzung können sein Harz-Lösemittel-Systeme mit Collodiumwolle, Vinylpolymere, Polyamid-Harze, Keton-Harze, Maleat-, Phenol-, Amin-, Acryl-, Polyester- oder Polyurethanharze als Bindemittel und vorwiegend Ethanol und Ethylacetat sowie höher siedende Ester, Alkohole und Glykolether als Lösemittel.

Das Thermotransfer-Band (auch Thermotransferfolie, Farbband, Carbonband, Thermal Transfer Ribbon, Ruban genannt) ist für den Thermotransfer-Drucker ein unverzichtbares Verbrauchsmaterial. Es hat z.B. folgenden Aufbau: Die Basis bildet das Trägermaterial aus einem z.B. 3,5 bzw. 6 µm starken Polyesterfilm (z.B. Polyethylenterephthalatfolien), welcher sich durch eine hohe mechanische Widerstandsfähigkeit, gute thermische Leitfähigkeit und eine gute Temperatur-Widerstandsfähigkeit auszeichnet. Auf der einen Seite des Polyesterfilms ist die Rückseitenbeschichtung (Backcoating), z.B. auf Silikonbasis, aufgebracht, welche dem Schutz des Druckkopfes vor Reibungsschäden dient. Auf der anderen Seite ist die sogenannte Releaseschicht (zum besseren Ablösen der Farbe) sowie die eigentliche 2 bis 4 µ starke Druckfarbenzusammensetzung enthaltend den Wachsblend aufgebracht. Die Farbe ist in das Wachs bzw. Harz eingebunden. Weiterhin kann zum Druckmedium hin eine Haftschicht vorgesehen sein (zwischen Papier und Wachsschicht).

Die Releaseschicht und/oder die Druckfarbe enthalten das erfindungsgemäße Wachsblend. Zur besseren Haftung kann dem Wachsblend sowohl in seiner Funktion als Releaseschicht und/oder als Bestanteil der Druckfarbe Haftvermittler zugemischt sein, typischerweise aus Co- bzw. Terpolymeren aufgebaut aus den Hauptkomponenten Ethen und Vinylacetat.

Der Aufbau kann insbesondere Folgender sein: Topcoat (Haftschicht, wenn vorhanden) mit etwa 0,5 bis 0,7 g/m², wachsgebundene Schicht (erfindungsgemäßer Wachsblend) mit Farbstoff mit etwa 4,0 bis 4,5 g/m², Trennschicht mit etwa 0,5 bis 1,0 g/m², Stärke des Trägers (z.B. Polyethylenterephthalat) etwa 3,5 bis 6,0 µm und ggf. rückseitige Beschichtung (Antihaftschicht) mit etwa 0,05 bis 0,1 g/m².

Es gibt unterschiedliche Grundtypen von Thermotransfer-Bändern. Wachs-Bänder sind speziell für die Applikation bei niedriger Druckenergie ausgelegt. Sie kommen vor allem bei Papier- und Karton-Etiketten zum Einsatz, wo der Druck selbst auf rauen Oberflächen für einen hohen Kontrast und somit für überzeugende Druckergebnisse sorgt. Wachs-Harz-Bänder (auch Hybrid-Bänder genannt) werden bei mittlerer Druckenergie appliziert. Sie sind universell einsetzbar, sowohl auf Papier- als auch auf Kunststoff-Etiketten. Besonders geeignet sind sie für beschichtete Papiere, Polyethylen (PE), Polypropylen (PP) und Textiletiketten. Aufgrund ihrer guten Wisch- und Kratzfestigkeit eignen sie sich für viele Anwendungen. Alle Wachs-Harz-Qualitäten sind wärmestabil und werden z.B. eingesetzt, wenn etikettierte Paletten noch eingeschrumpft werden.
Beim Thermotransferdruck wird eine mit Farbe und dem Wachsblend (Druckfarbenzusammensetzung) beschichtete Thermotransfer-Folie verwendet, die unter einem Thermodruckkopf hindurch geführt wird, der Hunderte von computergesteuerten Heizelementen besitzt, die das Druckbild übertragen. Die Thermotransfer-Folie ist zwischen Heizleiste und Druckerpapier geschoben und wird dort erhitzt. Durch die Erhitzung schmelzen die Farbpartikel und lösen sich von der Folie ab. Durch die Reibungskraft zwischen Papier und Farbe bleiben sie auf dem Papier kleben und erkalten dort. Um farbige Ausdrucke zu erhalten, wird eine Folie eingesetzt, auf der die Farben Gelb, Cyan und Magenta hintereinander angeordnet sind. Bei manchen Druckern kommt noch Schwarz hinzu, andere erzeugen Schwarz durch Mischung. Das Druckmedium braucht bei diesem Verfahren nicht unbedingt (Normal-)Papier zu sein. Es muss lediglich die Folie und die Temperatur auf das zu bedruckende Medium abgestimmt werden, dann können auch bestimmte Kunststoffoberflächen bedruckt werden. Eingesetzt wird ein Thermotransferdrucker oft zum Druck von dauerhaften Etiketten, die beispielsweise auf lang haltbaren Gütern zur Teilekennzeichnung mit Seriennummern aufgebracht werden und die gesamte Lebensdauer dieses Teiles überdauern sollen.

Ein ähnliches Verfahren bei dem die erfindungsgemäßen Wachsblends zur Anwendung kommen können, ist der Thermosublimationsdruck. Der Unterschied liegt darin, dass die auf der Trägerfolie aufgebrachten Farbstoffe durch Zuführen von Wärme verdampft werden. Hierbei geht der Farbstoff direkt vom festen in den gasförmigen Zustand über. Der gasförmige Farbstoff dringt in das zu bedruckende Material (Papier) ein oder schlägt sich darauf nieder (Kunststoff). In Abhängigkeit von der jedem Druckpunkt zugeführten Energiemenge wird auch die Menge der zu übertragenden Farbe (z.B. 64 Abstufungen pro Farbe) gesteuert, wodurch eine hohe Farbauflösung erreicht wird und brillante Farben entstehen.

Wenn das Verfahren für den Ausdruck von digitalen Bildern benutzt wird, muss je (Farb-)Pixel bis zu vier Mal dieselbe Druckposition angesteuert werden, um mit den üblichen vier Standarddruckfarben (Cyan, Magenta, Gelb und Schwarz) den gewünschten Farbton zu erzeugen.

Die Wachsblend enthaltenden Farbstoffe finden auch Verwendung in Druckfarben, die als "Solid Inks" (feste Druckfarbenzusammensetzung) bezeichnet werden. Hierbei handelt es sich um Tinte in Form von Feststoffblöcken, die z.B. als Patronen in einen Drucker eingebracht werden. Die Feststoffblöcke werden aufgeschmolzen und über Tintenstrahlköpfe auf das Druckmedium aufgebracht. Die Feststoffblöcke können auch in Form von unterschiedlichen Farben, z.B. Cyan, Magenta, Gelb und Schwarz zur Verfügung gestellt werden.

"Solid Inks" finden Verwendung in Phase-Change-Druckern, die in Ihrer Funktion den Tintenstrahldruckem entsprechen. Anstelle des Tintenstrahls wird das Wachsblend eines Wachsstiftes bei z.B. 90 °C verflüssigt und in einem Vorratsbehälter im flüssigen Zustand gehalten. Der Übertrag auf das Papier erfolgt mit einem Druckkopf, vergleichbar dem eines Tintenstrahldruckers. Das flüssige Wachs erkaltet direkt nach Verlassen der Druckdüsen. Als Farbträger fungieren vier wachsartige Farbstifte. Diese werden sukzessive abgeschmolzen und bei 90 °C in einem Vorratstank im flüssigen Zustand gehalten. Von dort aus gelangen sie nach dem gleichen Prinzip wie bei Tintenstrahldruckern über den Druckkopf auf das Papier. Unmittelbar nach dem Auftreffen auf das Papier geht die 'Tinte' wieder in den festen Zustand über. Dadurch dringt selbst bei sehr saugfähigen Papiersorten nur soviel Tinte ins Papier ein, wie für gute Haftung nötig ist.

Je nach Bedarf des Applikationsprozesses kann der erforderliche Erstarrungspunkt durch Anpassung des erfindungsgemäßen Wachsblends festgelegt werden. Dies erfolgt durch entsprechendes Mischen der erfindungsgemäßen Einzelkomponenten.

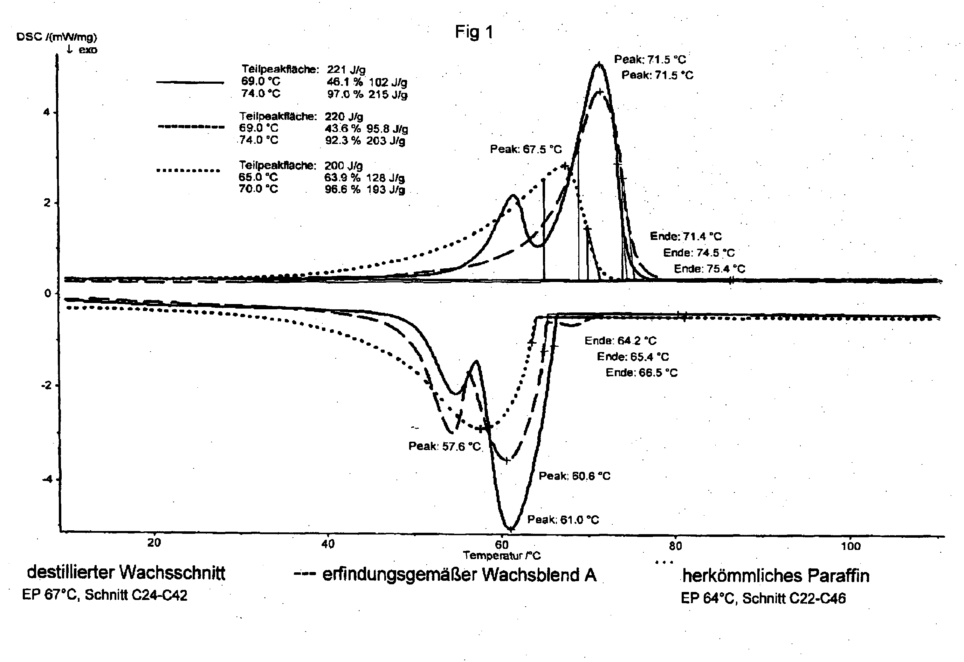

Die Erfindung wird durch folgende Ausführungsbeispiele und die
- Fig 1 darstellend eine DSC-Kurve von u.a. Wachsblend A erläutert:

### Versuchsbeschreibung:

In einem mit Rührwerk versehenen, beheizbaren Mischbehälter wurden die Bestandteile der Wachsphase nacheinander vorgelegt und auf 130°C erwärmt. Nachfolgend wurde der Fettalkohol unter Rühren zugegeben und der Vorgang solange aufrecht erhalten, bis sich eine klare Mischung eingestellt hatte.

Die DSC-Analyse zeigt, dass der erfindungsgemäße Wachsblend (gemäß Wachsblend A) und ein destillierter Wachsschnitt von Nippon-Seiro mit einem Erstarrungspunkt von 67° C und einer C-Kettenzahl 22 bis 42 in einem Temperaturbereich von plus / minus 2,5 °C um das Maximum der Schmelzkurve annähernd 50 % der Schmelzenergie aufnehmen. Dieses Verhalten gewährleistet das schnelle Verflüssigen und Erstarren dieser Materialien. Ein Standardparaffin (Sasolwax 6403 mit einem Erstarrungspunkt von 64°C und einer C-Kettenzahl 22 bis 46) hingegen nimmt in dem vergleichbaren Intervall lediglich um die 30% der Schmelzenergie auf und hat dadurch nicht die Umwandlungsgeschwindigkeit, wie die oben beschriebenen Materialien.

## Patentansprüche

1. Wachsblends enthaltend oder bestehend aus
(A) 5 bis 95 Gew.% langkettigen Kohlenwasserstoffen mit 18 bis 110 Kohlenstoffatomen, und
(B) 5 bis 95 Gew.% langkettigen Alkoholen mit 12 bis 36 Kohlenstoffatomen,
jeweils bezogen auf die Summe von (A) und (B), wobei der Erstarrungspunkt des langkettigen Kohlenwasserstoffs bzw. des langkettigen Kohlenwasserstoffgemisches und der Erstarrungspunkt des langkettigen Alkohols bzw. des langkettigen Alkoholgemisches sich um nicht mehr als 10°C unterscheidet und die Wachsblends zu 80 bis 100 Gew.% aus den Kohlenwasserstoffen (A) und den Alkoholen (B) bestehen.

2. Wachsblends gemäß Anspruch 1, wobei die langkettigen Kohlenwasserstoffe Fischer-Tropsch Wachse sind oder enthalten, und vorzugsweise
a) zumindest 50 Gew.%, insbesondere 70 Gew.%, der langkettigen Kohlenwasserstoffe Fischer-Tropsch Wachse sind,
b) die langkettigen Kohlenwasserstoffe eine Mischung aus Fischer-Tropsch Wachsen und mikrokristallinen Wachsen sind und/oder
c) die langkettigen Kohlenwasserstoffe bzw. die Fischer-Tropsch Wachse zumindest zum Teil hydroisomerisierte Fischer-Tropsch Wachse sind.

3. Wachsblends gemäß Anspruch 2, wobei die Fischer-Tropsch Wachse Erstarrungspunkte von 50 bis 105 °C aufweisen.

4. Wachsblends gemäß Anspruch 2 wobei die Fischer-Tropsch Wachse eine Kinematische Viskosität von kleiner 25 mm²/s, insbesondere kleiner 20 mm²/s, bei zumindest 10°C über dem Erstarrungspunkt (ASTM D445) aufweisen.

5. Wachsblends gemäß zumindest einem der vorhergehenden Ansprüche, wobei der Erstarrungspunkt des langkettigen Kohlenwasserstoffs bzw. des langkettigen Kohlenwasserstoffgemisches und der Erstarrungspunkt des langkettigen Alkohols bzw. Alkoholgemisches sich um nicht mehr als 8°C unterscheidet.

6. Wachsblends gemäß zumindest einem der vorhergehenden Ansprüche, wobei der Erstarrungspunkt des Wachsblends 45 bis 80 °C, ggf. sogar 45 bis 90 °C, insbesondere 50 bis 78 °C, ggf. sogar 50 bis 85 °C, insbesondere bevorzugt von 55 bis 75°C, ggf. sogar 55 bis 80°C, beträgt.

7. Wachsblends gemäß zumindest einem der vorhergehenden Ansprüche 1 bis 5, wobei der Erstarrungspunkt des Wachsblends 55 bis 90 °C, insbesondere 70 bis 90 °C, beträgt.

8. Wachsblends gemäß zumindest einem der vorhergehenden Ansprüche enthaltend oder bestehend aus
(A) 20 bis 50 Gew.% oder 20 bis 40 Gew.%, Kohlenwasserstoffen (A) und
(B) 50 bis 80 Gew.% oder 60 bis 80 Gew.%, Alkoholen (B)
jeweils bezogen auf die Summe von (A) und (B).

9. Wachsblends gemäß zumindest einem der vorhergehenden Ansprüche, **dadurch gekennzeichnet, dass** in einem Temperaturbereich von plus / minus 2,5 °C um das Maximum der Schmelzkurve 40 bis 80 %, insbesondere 43 bis 77 % und besonders bevorzugt 45 bis 75 % der Schmelzenergie aufgenommen wird.

10. Wachsblends gemäß zumindest einem der vorhergehenden Ansprüche, **dadurch gekennzeichnet, dass** die langkettigen Kohlenwasserstoffe Kohlenwasserstoff mit 18 bis 100 Kohlenstoffatomen, vorzugsweise 20 bis 100 Kohlenstoffatomen, sind.

11. Druckfarbenzusammensetzungen enthaltend die Wachsblends gemäß zumindest einem der vorherigen Patentansprüche enthaltend weiterhin zumindest einen Farbstoff und/oder zumindest ein Harz und/oder zumindest einen Haftvermittler.

12. Druckfarbenzusammensetzungen gemäß Anspruch 11 enthaltend 5 bis 20 Gew.-% Farbstoffe.

13. Druckfarbenzusammensetzungen gemäß Anspruch 11 enthaltend 0,5 bis 10 Gew.-% Harze.

14. Druckfarbenzusammensetzungen gemäß Anspruch 11 enthaltend 0,2 bis 10 Gew.-% Haftvermittler.

15. Thermotransferband aufweisend eine Trägerfolie aus einem polymeren Kunststoffmaterial und zumindest eine Schicht aufweisend den Wachsblend bzw. die Druckfarbenzusammensetzung nach zumindest einem der Ansprüche 1 bis 14.

16. Verwendung der Wachsblends gemäß zumindest einem der Ansprüche 1 bis 10 als beim Druckvorgang aufschmelzender Träger für Druckfarben.

17. Verwendung gemäß Anspruch 16 als Teil der Beschichtung eines Thermotransferbandes.

## Claims

1. Wax blends comprising or consisting of
(A) 5 to 95% by weight long-chain hydrocarbons having 18 to 110 carbon atoms, and
(B) 5 to 95% by weight long-chain alcohols having 12 to 36 carbon atoms, relative in each case to the total of (A) and (B), wherein the congealing point of the long-chain hydrocarbon or the long-chain hydrocarbon mixture and the congealing point of the long-chain alcohol or the long-chain alcohol mixture do not differ by more than 10 °C, and the hydrocarbons (A) and the alcohols (B) constitute from 80 to 100% by weight of the wax blends.

2. The wax blends according to claim 1, wherein the long-chain hydrocarbons are or comprise Fischer-Tropsch waxes, and preferably
a) at least 50% by weight, particularly 70% by weight of the long-chain hydrocarbons are Fischer-Tropsch waxes,
b) the long-chain hydrocarbons are a mixture of Fischer-Tropsch waxes and microcrystalline waxes, and/or
c) at least some of the long-chain hydrocarbons or Fischer-Tropsch waxes are hydroisomerised Fischer-Tropsch waxes.

3. The wax blends according to claim 2, wherein the Fischer-Tropsch waxes have congealing points from 50 to 105 °C.

4. The wax blends according to claim 2, wherein the Fischer-Tropsch waxes have a kinematic viscosity less than 25 mm²/s, particularly less than 20 mm²/s, at a temperature at least 10 °C higher than the congealing point (ASTM D445).

5. The wax blends according to at least one of the preceding claims, wherein the congealing point of the long-chain hydrocarbon or the long-chain hydrocarbon mixture and the congealing point of the long-chain alcohol or the alcohol mixture do not differ by more than 8 °C.

6. The wax blends according to at least one of the preceding claims, wherein the congealing point of the wax blend is 45 to 80 °C, optionally even 45 to 90 °C, more particularly 50 to 78 °C, optionally even 50 to 85 °C, particularly preferably from 55 to 75 °C, optionally even 55 to 80 °C.

7. The wax blends according to at least one of the preceding claims 1 to 5, wherein the congealing point of the wax blend is 55 to 90 °C, particularly 70 to 90 °C.

8. The wax blends according to at least one of the preceding claims, comprising or consisting of
(A) 20 to 50% by weight or 20 to 40% by weight hydrocarbons (A) and
(B) 50 to 80% by weight or 60 to 80% by weight alcohols (B) relative in each case to the total of (A) and (B).

9. The wax blends according to at least one of the preceding claims, **characterised in that** 40 to 80%, particularly 43 to 77% and particularly preferably 45 to 75% of the melt energy is absorbed in a temperature range of plus / minus 2.5 °C about the maximum of the melt curve.

10. The wax blends according to at least one of the preceding claims, **characterised in that** the long-chain hydrocarbons are hydrocarbons having 18 to 100 carbon atoms, preferably 20 to 100 carbon atoms.

11. Printing ink compositions comprising the wax blends according to at least one of the preceding claims, further comprising at least one dye stuff and/or at least one resin and/or at least one adhesion promoter.

12. Printing ink compositions according to claim 11, comprising 5 to 20% by weight dye stuffs.

13. Printing ink compositions according to claim 11, comprising 0.5 to 10% by weight resins.

14. Printing ink compositions according to claim 11, comprising 0.2 to 10% by weight adhesion promoters.

15. A thermal transfer ribbon comprising a carrier film made from a polymer plastic material and at least one layer comprising the wax blend or printing ink composition according to at least one of claims 1 to 14.

16. Use of the wax blends according to at least one of claims 1 to 10 as a carrier for printing inks melting during the printing process.

17. Use according to claim 16 as a component of a thermal transfer ribbon coating.

## Revendications

1. Mélanges de cires comprenant ou se composant de :
(A) 5 à 95 % en poids d'hydrocarbures à longue chaîne ayant de 18 à 110 atomes de carbone, et
(B) 5 à 95 % en poids d'alcools à longue chaîne ayant de 12 à 36 atomes de carbone,
à chaque fois par rapport au total de (A) et (B), dans lesquels le point de figeage de l'hydrocarbure à longue chaîne ou du mélange d'hydrocarbures à longue chaîne et le point de figeage de l'alcool à longue chaîne ou du mélange d'alcools à longue chaîne ne se différencient pas de plus de 10°C et les mélanges de cires se composent de 80 à 100 % en poids d'hydrocarbures (A) et d'alcools (B).

2. Mélanges de cires selon la revendication 1, dans lesquels les hydrocarbures à longue chaîne sont des cires de Fischer - Tropsch ou en contenant, et de préférence
a) au moins 50 % en poids, en particulier 70 % en poids des hydrocarbures à longue chaîne sont des cires de Fischer - Tropsch,
b) les hydrocarbures à longue chaîne sont un mélange de cires de Fischer - Tropsch et de cires microcristallines, et/ou
c) les hydrocarbures à longue chaîne ou les cires de Fischer - Tropsch sont des cires de Fischer - Tropsch au moins en partie hydroisomérisées.

3. Mélanges de cires selon la revendication 2, dans lesquels les cires de Fischer - Tropsch présentent des points de figeage de 50 à 105°C.

4. Mélanges de cires selon la revendication 2, dans lesquels les cires de Fischer - Tropsch présentent une viscosité cinématique inférieure à 25 mm²/s, en particulier inférieure à 20 mm²/s, à au moins 10°C au-dessus du point de figeage (norme ASTM D445).

5. Mélanges de cires selon au moins une des revendications précédentes, dans lesquels le point de figeage de l'hydrocarbure à longue chaîne ou du mélange d'hydrocarbures à longue chaîne et le point de figeage de l'alcool à longue chaîne ou du mélange d'alcools à longue chaîne ne se différencient pas de plus de 8°C.

6. Mélanges de cires selon au moins une des revendications précédentes, dans lesquels le point de figeage du mélange de cires est de 45 à 80°C, voire même de 45 à 90°C, en particulier de 50 à 78°C, voire même de 50 à 85°C, en particulier de préférence de 55 à 75°C, voire même de 55 à 80°C.

7. Mélanges de cires selon au moins une des revendications précédentes 1 à 5, dans lesquels le point de figeage du mélange de cires est de 55 à 90°C, en particulier de 70 à 90°C.

8. Mélanges de cires selon au moins une des revendications précédentes, comprenant ou se composant de
(A) 20 à 50 % en poids ou 20 à 40 % en poids d'hydrocarbures (A), et
(B) 50 à 80 % en poids ou 60 à 80 % en poids d'alcools (B),
à chaque fois par rapport au total de (A) et (B).

9. Mélanges de cires selon au moins une des revendications précédentes, **caractérisés en ce que**, dans une plage de températures de plus / moins 2,5°C autour du maximum de la courbe de fusion, 40 à 80 %, en particulier 43 à 77 % et particulièrement préférentiellement 45 à 75 % de l'énergie de fusion est absorbée.

10. Mélanges de cires selon au moins une des revendications précédentes, **caractérisés en ce que** les hydrocarbures à longue chaîne sont des hydrocarbures ayant de 18 à 100 atomes de carbone, de préférence de 20 à 100 atomes de carbone.

11. Compositions pour encres d'impression comprenant les mélanges de cires selon au moins une des revendications précédentes comprenant en outre au moins un colorant et/ou au moins une résine et/ou au moins un agent d'adhérence.

12. Compositions pour encres d'impression selon la revendication 11, contenant 5 à 20 % en poids de colorants.

13. Compositions pour encres d'impression selon la revendication 11, contenant 0,5 à 10 % en poids de résines.

14. Compositions pour encres d'impression selon la revendication 11, contenant 0,2 à 10 % en poids d'agents d'adhérence.

15. Ruban de transfert thermique comportant une feuille support constituée d'un matériau plastique polymérique et d'au moins une couche comprenant le mélange de cires ou la composition pour encres d'impression selon au moins une des revendications 1 à 14.

16. Utilisation des mélanges de cires selon au moins une des revendications 1 à 10 en tant que supports pour encres d'impression fondant lors du processus d'impression.

17. Utilisation selon la revendication 16 en tant que partie du revêtement d'un ruban de transfert thermique.
